# EUROPEAN PATENT SPECIFICATION

(11) **EP 2 836 811 B1**
(45) Date of publication and mention of the grant of the patent: **01.08.2018**
(21) Application number: 13724405.9
(22) Date of filing: 08.04.2013
(51) Int. Cl.: G01M 17/02, G01M 17/03

(54) **METHOD AND APPARATUS FOR CONTROLLING TYRES IN A PRODUCTION LINE**
VERFAHREN UND VORRICHTUNG ZUR KONTROLLE VON REIFEN IN EINER PRODUKTIONSLINIE
PROCÉDÉ ET APPAREIL DE VÉRIFICATION DE PNEUS DANS UNE LIGNE DE PRODUCTION

(30) Priority: 11.04.2012 IT MI20120578; 20.04.2012 US 201261636208 P
(43) Date of publication of application: 18.02.2015
(73) Proprietor: Pirelli Tyre S.p.A., 20126 Milano (IT)
(72) Inventor: BOFFA, Vincenzo, I-20126 Milano (IT); MANCINI, Gianni, I-20126 Milano (IT); MOLINARI, Filippo, I-10129 Torino (IT)
(74) Representative: Vittorangeli, Lucia
(86) International application number: PCT/IB2013/052787
(87) International publication number: WO 2013/153499

(56) References cited:
- EP-A1- 1 494 018
- JP-A- 8 086 635
- US-A- 3 952 195

## Description

The present invention regards a method for controlling tyres in a production line.

The invention also regards a process and an apparatus for controlling tyres in a production line.

By "production line" of tyres it is intended the set of at least one work station, at least one control station and at least one vulcanisation station.

By "building line" it is intended the set of one or more work stations operatively associated for building a green tyre.

By "work station" it is intended an area in which at least one building operation is carried out for a tyre under production.

By "tyre under production" it is intended a tyre at the green or vulcanised state within a production line or a part thereof.

By "flow of tyres under production" it is intended the number of tyres under production that move through a predetermined zone of the production line in a predetermined time.

By "cycle time" it is intended the maximum time employed by a tyre under production for moving from a work station.

By "tomographic control" of a tyre under production it is intended a verification of structural characteristics of said tyre under production based on a substantially complete virtual reconstruction, also three-dimensional, obtained with computerised tomography technique.

In the field of production and building processes for tyres for vehicle wheels, it has been observed that it is necessary carry out quality controls on the obtained products, for the dual purpose of preventing defective tyres from being placed on the market, and progressively adjusting the apparatuses and machinery employed, in a manner so as to improve and optimise the execution of the steps performed in the production process.

Such quality controls can be carried out by human operators who, typically at the end of the production line, dedicate a predetermined time, e.g. between 30 s and 60 s, to a visual and tactile examination of the tyre; if, in light of the operator's experience and sensitivity, he suspects that the tyre does not meet certain quality standards, the tyre itself is subjected to further controls, by means of suitable equipment, for the purpose of evaluating in greater detail possible structural and/or quality deficiencies.

JP08086635 illustrates a control based on techniques of tomographic type, in which an emitter and multiple detectors are positioned on opposite sides of the tyre to be controlled in such a manner that the radiations emitted hit all of the tyre or, in any case, pass through at least one portion of the tyre itself twice before being received by the detectors.

US 4,785,354 shows, in a different control based on techniques of tomographic type, that the radiations emitted by the emitter pass through the tyre only once before being received by the detector.

The Applicant observed that controls performed by human operators have clear limits and drawbacks, since as stated above they are based on the experience and sensitivity of the single operator, and thus cannot be considered repeatable and sufficiently reliable.

The Applicant observed that equipment of the type illustrated in JP08086635 is not capable of providing sufficiently reliable output. Indeed, the tyres are made of different materials, comprising textile materials, elastomer mixtures and metallic materials. The Applicant realised that the fact that the radiations pass twice through the tyre, and hence also through the metallic components contained therein, causes an undesired amplification of the so-called "partial volume effect" due to the specific behaviour of the metallic materials hit by the abovementioned radiations.

The Applicant also realised that when the radiations pass through the tyre several times, the detection becomes even more unreliable due to the possible occlusion effects, due to the fact that some tyre portions can conceal other portions in the steps of emission and detection of the employed electromagnetic radiations.

The Applicant also realised that, due to the multiple crossings of the radiations through the tyre, the calibration of the radiation energy is extremely problematic and it can therefore lead to errors and/or imprecision in the virtual reconstruction of the tyre.

In light of that stated above, the volumetric reconstruction of the entire tyre structure results rather imprecise, both in geometric terms and in terms of discrimination of the various materials constituting the tyre, thus making the subsequent control of the presence of possible defects based on such tomographic reconstruction rather unreliable. Another tire inspection apparatus of the prior art is disclosed in US3952195. The Applicant also observes that the oscillating movements to which the emitter and receiver are subjected, illustrated for example in US 4,785,354, make solutions of this type unsuitable for a quick and reliable control, such as that required in a production line.

The Applicant then perceived that, for the control to be employed in said production line, it is necessary that the control itself, and in particular the operations of sending and detection of the electromagnetic radiations, are carried out in limited time periods.

The Applicant then perceived that suitably controlling the time necessary for carrying out the tomographic control, and simultaneously controlling the positions from which the radiations used for the tomographic control itself are generated, allows ensuring that a control station, in which the tomographic control of the tyre is carried out, is introduced in a production line without substantially altering the productivity of the line itself.

The Applicant finally found that such result can be obtained by adjusting the mutual position of the tyre under production and the emission/detection devices that are part of the control station, in such a manner that at least the positions from which the electromagnetic radiations are generated describe a path concatenated with the toroidal structure of the tyre under production.

Preferably, moreover, the tomographic control is carried out in a time comparable to or in any case not greater than three times one cycle time.

According to a first aspect, the invention regards a method for controlling tyres in a production line comprising at least one work station, at least one control station and at least one vulcanisation station.

Preferably it is provided to feeding n tyres under production in a predetermined time interval to the inlet of said at least one control station.

Preferably it is provided to send electromagnetic radiations in said at least one control station on each of said n tyres under production, detecting them in accordance with a plurality of emission and detection operations.

Preferably it is provided to adjust the mutual position of each of said n tyres under production and of emission and detection devices during said emission and detection operations in such a manner that at least the positions from which said electromagnetic radiations are generated describe a path concatenated with the toroidal structure of each of said n tyres under production, making a tomographic control generating at least one plurality of control parameters.

Preferably it is provided to generate a notification signal, as a function of a comparison between said control parameters and corresponding reference parameters.

Preferably it is provided in the same predetermined time interval to introduce k tyres under production with k=<n to said production line coming out of said at least one control station and convey n-k tyres under production to the outside of said production line as a function of said notification signal.

The Applicant deems that in this manner it is possible to obtain, in acceptable times and in a precise and reliable manner, a two-dimensional, three-dimensional reconstruction of volume, three-dimensional reconstruction of surface area of the tyre under production, which can be advantageously used for controlling the quality of the tyres in a production line.

According to a different aspect, the invention regards a process for controlling tyres in a production line.

Preferably it is provided to provide a tyre under production to be controlled.

Preferably it is provided to provide at least one emission device adapted to emit electromagnetic radiations.

Preferably it is provided to set said tyre under production in rotation around a rotation axis thereof relative to a given reference system.

Preferably during movement of said tyre under production, it is provided to repeatedly move said emission device relative to said given reference system along an annular trajectory concatenated with said tyre under production.

Preferably it is provided during movement of the emission device, to send, through said emission device, electromagnetic radiations directed onto at least one portion of said tyre under production.

Preferably it is provided to detect said electromagnetic radiations after an interaction between said electromagnetic radiations and at least one portion of said tyre under production, the sending and detection of said electromagnetic radiations defining a plurality of emission and detection operations.

Preferably it is provided to determine at least one plurality of control parameters as a function of the detection of said electromagnetic radiations.

Preferably it is provided to carry out a comparison between said control parameters and corresponding reference parameters.

Preferably it is provided to generate a notification signal as a function of said comparison.

According to another aspect, the invention regards an apparatus for controlling tyres in a production line.

Preferably a first actuating member is provided for a tyre under production to be controlled, configured to set said tyre under production in rotation around a rotation axis thereof relative to a given reference system.

Preferably at least one emission device is provided, adapted to emit electromagnetic radiations.

Preferably a second actuating member is provided that is configured to repeatedly move, relative to said given reference system, said emission device along an annular trajectory concatenated with said tyre under production, during the movement of said tyre under production.

Preferably it is provided that said emission device is adapted to send electromagnetic radiations directed onto at least one portion of said tyre under production.

Preferably at least one detection device is provided for detecting said electromagnetic radiations after an interaction between said electromagnetic radiations and at least one portion of said tyre under production.

Preferably a processing unit is provided that is configured at least for one of the following functions:
- determining a plurality of control parameters as a function of said detected radiations;
- carrying out a comparison between said control parameters and predetermined reference parameters;
- generating a notification signal as a function of said comparison.

In accordance with at least one of the aforesaid aspects, the invention can comprise one or more of the preferred characteristics specified hereinbelow.

Preferably, at each emission and detection operation of said electromagnetic radiations, said radiations pass through a single portion of each of said n tyres under production included between two radial half-planes, whose trace in an equatorial plane of the tyre itself under production defines an angle smaller than 5°.

Preferably the mutual position of each of said n tyres under production and said emission and detection devices is adjusted so that that each segment joining an emission region of said emission device with the respective detection region of said detection device passes, in each emission and detection operation, through a single portion of said tyre under production included between two radial half-planes, whose trace in an equatorial plane of the tyre itself under production defines an angle smaller than 5°.

Preferably said control station is provided after said at least one work station and upstream of said at least one vulcanisation station.

In this manner it is possible to carry out a quality control on the tyre before the same is subjected to the vulcanisation operation; if the tyre is deemed unfit, one would avoid a useless waste of time and resources dedicated to the vulcanisation of a tyre that subsequently could not have been sold and/or used in another useful manner.

Preferably said control station is provided downstream of said at least one vulcanisation station.

In this manner it is possible to verify the presence of possible structural deficiencies of the tyre which could also arise during or following the vulcanisation operation.

Preferably each of said n-k tyres under production conveyed to the outside of the production line is sent to a verification station for carrying out at least one further inspection on the same tyre under production.

In this manner it is possible to determine the problems of each tyre with greater accuracy and it is therefore possible to decide, in a more reliable manner, if the tyre must be definitively rejected.

Preferably provision is made for a first control station between said at least one work station and said at least one vulcanisation station and a second control station downstream of said at least one vulcanisation station.

In this manner a very accurate control is carried out overall, aimed to select with the greatest possible reliability which tyres are to be considered suitable and which are to be subjected to further verifications or rejected.

Preferably said predetermined time is included between about n/5 times and about 5n times one cycle time.

In this manner the control method according to the invention can be advantageously applied in a production line without significantly reducing the productivity of the line itself. Said predetermined time corresponds to about n times one cycle time.

Preferably said emission device is continuously moved in the same direction along said annular trajectory.

In this manner it is possible to limit the time necessary for carrying out the tomographic control, in particular by virtue of the fact that the motion direction of the emission device is not reversed, rather the emission device is continuously moved in the same direction along its own trajectory.

Preferably said annular trajectory substantially lies in a given plane.

Preferably said given plane is oriented transversely relative to an equatorial plane of said tyre under production.

Preferably said given plane forms an angle with said equatorial plane that is included between about 80° and about 100°.

In this manner it is possible to detect characteristics of single portions of the tyre having predetermined shape even if the tyre is moved around its own rotation axis while the emission device is moved along its own annular trajectory.

Preferably said annular trajectory substantially passes through a geometric centre of said tyre under production.

Preferably said tyre under production carries out a full rotation in a period of time included between about 30 s and about 120 s.

Preferably, during a full rotation of said tyre under production, said emission device carries out a number of rotations along said annular trajectory included between about 1000 and about 50000.

Preferably said notification signal is generated after a full rotation of said tyre under production.

In this manner the decision relative to the suitability of the tyre can be taken after having considered the characteristics of the entire tyre, thus reducing the probability of committing evaluation errors.

Preferably said action of controlling tyres in a production line is performed before an operation of vulcanising said tyre under production.

Preferably said action of controlling tyres in a production line is performed after an operation of vulcanising said tyre under production.

Preferably it is provided to:
- select one or more energy intervals of said electromagnetic radiations detected before carrying out said comparison.

Preferably said intervals comprise at least one of:
- a low-energy interval included between about 20 KeV and about 300 KeV;
- an intermediate-energy interval included between about 300 KeV and about 600 KeV;
- a high-energy interval included between about 600 KeV and about 1 MeV.

In this manner it is possible to detect structural characteristics of different materials present in the tyre under production.

Preferably said electromagnetic radiations are X-rays having a frequency included between about 3 10¹⁸ Hz and about 3 10²⁰ Hz.

Preferably a plurality of emission devices is provided.

More preferably each emission device of said plurality operates in a different energy interval Ei.

Still more preferably each emission device of said plurality operates simultaneously in a different energy interval Ei.

Preferably it is also provided to cool said emission device.

In this manner it is possible to prevent the emission and subsequent detection operations from being interrupted or slowed due to an excessive temperature reached by the emission device.

Preferably a ventilation system for cooling said emission device can be provided.

Preferably said second actuating member is configured to continuously move said emission device in the same direction along said annular trajectory.

Preferably said processing unit is configured to select one or more energy intervals of said electromagnetic radiations detected before carrying out said comparison.

Preferably a supporting structure is provided on which said emission device is mounted, said second actuating member being active on said supporting structure to move said emission device.

Preferably said at least one detection device is substantially integral with said emission device.

In this manner it is possible to obtain a detection structure with limited size, since the detection device is still substantially opposed to and facing the emission device, and it is thus sufficient to provide a detection device of size such to receive the radiations that are emitted by the emission device in a single time instant.

Preferably said at least one detection device is mounted on said supporting structure.

Preferably said at least one detection device is substantially stationary relative to said given reference system.

Preferably said at least one detection device is disposed along an annular profile formed with portions that, during the movement of said emission device, are sequentially substantially opposed to said emission device relative to at least one portion of said tyre under production.

In this manner it is possible to obtain an apparatus with simplified structure, since only the emission device requires being moved, while the detection device remains stationary relative to said given reference system, and it is in any case shaped in a manner so as to receive substantially all the radiations emitted by the emission device and interacting with the tyre under production.

Preferably said supporting structure has a substantially annular shape.

Preferably said supporting structure comprises at least two mutually movable portions in such a manner that said supporting structure can be configured between an open condition in which said tyre under production can be interposed between said portions, and a closed condition in which the annular shape of said supporting structure is concatenated with said tyre under production.

Preferably each portion of said supporting structure has one end hinged to a corresponding end of the other portion.

Preferably said supporting structure is substantially C-shaped.

In this manner the tyre under production can be easily inserted between the emission device and the detection device.

Preferably the electromagnetic radiations emitted by said emission device are directed towards the region delimited by said annular trajectory.

Preferably the electromagnetic radiations emitted by said emission device are directed onto at least one portion of said tyre under production surrounded by said annular trajectory.

Further characteristics and advantages will be clear from the detailed description of a preferred and non-exclusive embodiment of the invention.

Such description is provided hereinbelow with reference to the attached drawings, also having merely exemplifying and therefore non-limiting purpose, wherein:
- figures 1a, 1b and 1c schematically show the production lines in which the method, the process and the apparatus according to the present invention can be employed;
- figure 2 shows a first embodiment of an apparatus according to the invention;
- figure 3 shows a part of the apparatus of figure 2 in a different operative configuration;
- figure 4 shows a second embodiment of an apparatus according to the invention;
- figure 5 shows a part of the apparatus of figure 4 in a different operative configuration;
- figures 6 and 7 show further embodiments of the apparatus according to the invention;
- figures 8-11 show schematic views aimed at representing some geometric characteristics of operations performed in the method, in the process and by the apparatus according to the invention;
- figure 12 shows a block diagram of an apparatus according to the invention.

With reference to the attached drawings, a production line in which a control performed through the method, the process and/or the apparatus according to the present invention can be carried out was indicated in its entirety with 1.

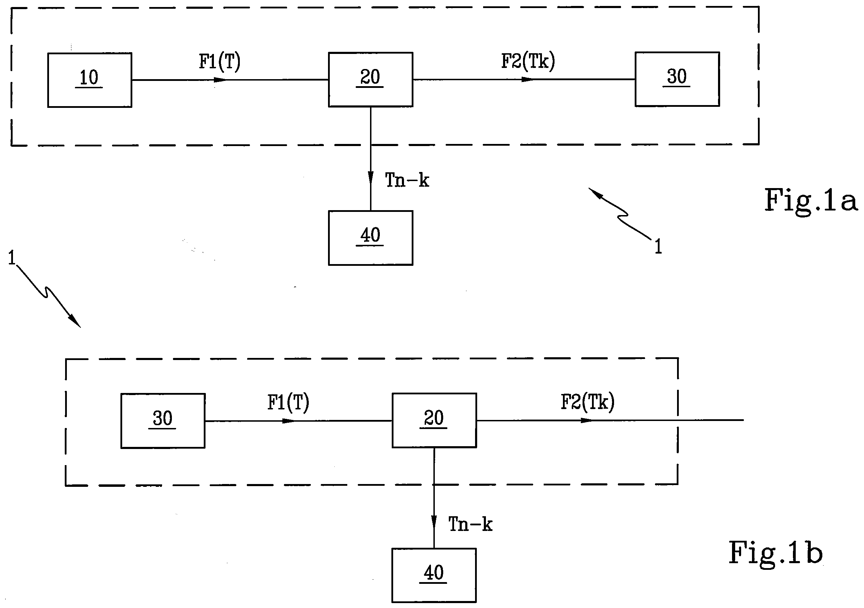

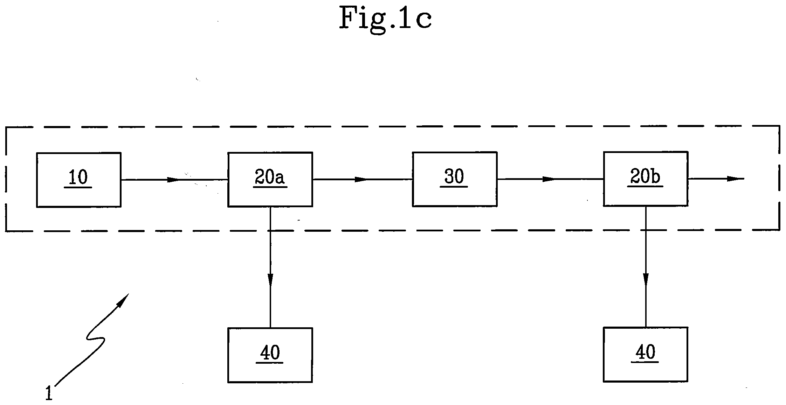

The production line 1 (figures 1a, 1b, 1c) comprises at least one work station 10, at least one control station 20 and at least one vulcanisation station 30.

The production line 1 can also comprise further stations, not illustrated in detail hereinbelow.

In the embodiment of figure 1a, the control station 20 is provided after the work station 10 and upstream of the vulcanisation station 30.

In the embodiment of figure 1b, the control station 20 is provided downstream of the vulcanisation station 30.

In the embodiment of figure 1c, provision is made for a first control station 20a operatively situated between the work station 10 and the vulcanisation station 30, and a second control station 20b operatively situated downstream of the vulcanisation station 30.

For the sake of simplicity, the following description will refer to the single control station 20; nevertheless, it should be noted that such description could be indiscriminately applied to the control station 20, to the first control station 20a and/or to the second control station 20b mentioned above.

In the method according to the invention, a flow F1 of n tyres under production T is fed to the inlet of the control station 20.

Such flow F1 of n tyres under production T corresponds to the passage of n tyres under production T in a predetermined time interval PT.

Preferably such predetermined time PT is included between about n/5 times and about 5n times one cycle time.

Still more preferably the predetermined time PT corresponds to about n times one cycle time.

By way of example, the cycle time can be included between about 20 s and about 120 s, more preferably between about 60 s and about 90 s.

The following description will make reference to a single tyre under production T. That described could be applied to each of the n tyres under production T defining the entrance flow F1.

Preferably the n tyres under production T will be sequentially processed, one after the other, by the same devices present in the control station 20.

In a different embodiment, the control station 20 can be equipped for controlling multiple tyres under production, in parallel and simultaneously.

In the control station 20, during the same predetermined time interval PT, electromagnetic radiations ER are sent on each tyre under production T.

Preferably said electromagnetic radiations ER are X-rays having a frequency included between about 3 10¹⁸ Hz and about 3 10²⁰ Hz.

Preferably the emission device 21 comprises an X-ray tube.

The electromagnetic radiations ER are detected following the interaction with the tyre under production T.

In this manner, a plurality of emission and detection operations are carried out for said electromagnetic radiations ER.

In order to perform such operations, at least one emission device 21 and one detection device 22 are provided.

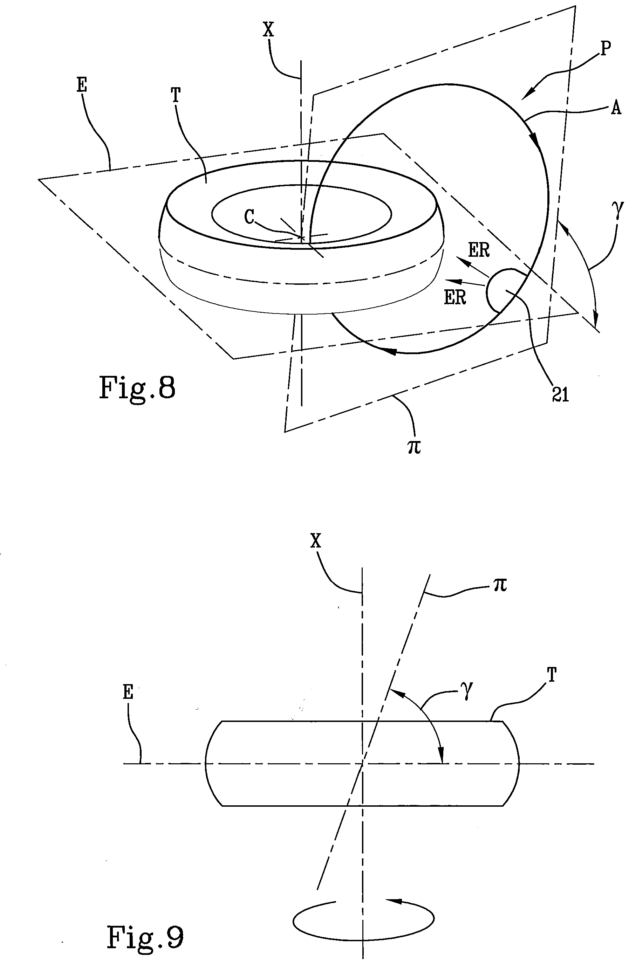

During said emission and detection operations, the mutual position of the tyre under production T and of the emission and detection devices 21, 22 is adjusted. In this manner at least the positions from which the electromagnetic radiations ER are generated describe a path P concatenated with the toroidal structure of each of the tyres under production T (figure 8).

In practice the toroidal structure of the tyre under production T and the path P, the latter being substantially annular, are mutually arranged as two consecutive rings of a chain.

Preferably, at each emission and detection operation for the electromagnetic radiations ER, said radiations pass through a single portion of the tyre under production T included between two radial half-planes α1, α2.

Preferably the trace of said radial half-planes α1, α2 on an equatorial plane E of the tyre itself under production defines an angle ϕ smaller than 5°.

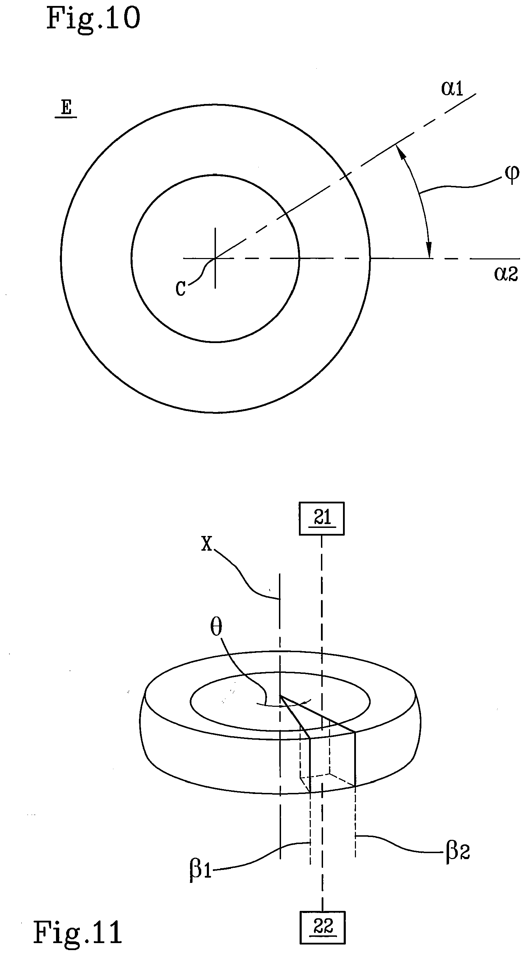

The radial half-planes α1, α2 and the portion delimited thereby are schematically shown in figure 10.

It is to be noted that, as stated above, the electromagnetic radiations ER are generated from positions defining the abovementioned annular path P; preferably, the latter passes through the geometric centre C of the tyre under production T. At the time when the radiations are generated, from a position substantially coinciding with the geometric centre C of the tyre under production T, the angle ϕ delimited by the radial half-planes α1, α2 can with good approximation identify the trace, on the equatorial plane E, of the spatial region in which the electromagnetic radiations ER are propagated and the portion of tyre under production included between such radial half-planes α1, α2 is that hit by the radiations ER themselves.

In the other cases, i.e. when the electromagnetic radiations ER are not generated at the geometric centre C of the tyre under production T, the portion of tyre under production hit by the electromagnetic radiations ER is in any case included between the two radial half-planes α1, α2, even if not being exactly delimited by the half-planes α1, α2 themselves.

Preferably, in carrying out the emission and detection operations, the mutual position of each of the n tyres under production T and the emission and detection devices 21, 22 is adjusted so that each segment joining an emission region of the emission device 21 with the respective detection region of the detection device 22 passes, in each emission and detection operation, through a single portion of said tyre under production included between two radial half-planes β1, β2.

Preferably, the trace of said radial half-planes β1, β2 on the equatorial plane E of the tyre itself under production defines an angle θ smaller than 5°.

The radial half-planes β1, β2 and the portion delimited thereby are schematically shown in figure 11.

With regard to the portion of tyre under production delimited by the radial half-planes β1, β2, the same observation outlined above with reference to the radial half-planes α1, α2 holds true: when the emission device 21 is situated substantially at the geometric centre C of the tyre under production T, the half-planes β1, β2 can rather precisely identify the portion of tyre under production fully traversed by the abovementioned segments joining the emission device 21 and the detection device 22. On the other hand, when the emission device is not situated at the geometric centre C of the tyre under production T, the portion traversed by such segments will be contained between the radial half-planes β1, β2, even if not being exactly delimited by the same.

In the preferred embodiment, the radial half-planes α1, α2 substantially coincide with the radial half-planes β1, β2 and the angle ϕ thus substantially has the same width with respect to the angle θ.

Preferably the tyre under production T is moved, relative to a given reference system, in rotation around a rotation axis thereof X.

Such rotation axis X of the tyre under production T is the axis of symmetry orthogonal to the equatorial plane E of the tyre under production T itself.

Preferably the tyre under production T carries out a full rotation around the rotation axis X thereof in a period of time included between about 30 s and about 120 s.

Preferably the rotation of the tyre under production T can be substantially continuous, or it can be carried out with sequential steps.

Preferably, during the movement of the tyre under production T, at least the emission device 21 is repeatedly moved relative to the given reference system. The emission device 21 is moved along an annular trajectory A concatenated with the tyre under production T (figure 8). Such annular trajectory A defines the abovementioned path P. The emission device 21 is continuously moved in the same direction along the annular trajectory A thereof.

Preferably, during a full rotation of the tyre under production T, the emission device 21 carries out a number of rotations along the annular trajectory A included between about 1000 and about 50000.

Preferably the annular trajectory A substantially lies in a given plane n (figures 8-9).

Preferably the given plane π is oriented transversely relative to the equatorial plane E of the tyre under production T.

Preferably the given plane n forms an angle γ with the equatorial plane E included between about 80° and about 100°.

In this manner it is possible to compensate for the movement of the tyre under production T in rotation and ensure that the emission and detection operations are carried out as if the tyre under production T was substantially stationary and the plane π was a radial plane of said tyre under production T; this clearly simplifies the three-dimensional reconstruction operation of the tyre structure.

Preferably the annular trajectory A substantially passes through a geometric centre C of the tyre under production T.

The abovementioned electromagnetic radiations ER are emitted by the emission device 21 during the movement thereof.

Preferably the electromagnetic radiations ER emitted by the emission device 21 are directed towards the interior of the region delimited by the annular trajectory A.

Preferably the electromagnetic radiations ER emitted by the emission device 21 are directed onto at least one portion of the tyre under production T surrounded by the annular trajectory A.

Preferably a cooling operation for the emission device 21 is performed; for this purpose, a suitable ventilation system 60 associated with said emission device 21 can be arranged.

Upon detection of the abovementioned electromagnetic radiations ER, after the same have interacted with a portion of the tyre under production T, a plurality of control parameters CP are generated.

Such control parameters CP are in practice representative of structural characteristics of the tyre under production T.

In practice the control parameters CP define the output of a tomographic reconstruction of the tyre under production T.

The control parameters CP are compared with corresponding reference parameters Ref.

By way of example, suitable pattern matching algorithms can be employed for carrying out this comparison.

In a preferred embodiment, one or more energy intervals Ei of the electromagnetic radiations ER detected are selected before carrying out the abovementioned comparison.

In particular the intervals Ei can comprise at least one of:
- a low-energy interval E1 included between about 20 KeV and about 300 KeV;
- an intermediate-energy interval E2 included between about 300 KeV and about 600 KeV;
- a high-energy interval E3 included between about 600 KeV and about 1 MeV.

Preferably there can be more than one, for example two emission devices 21.

In such case, it is particularly preferred to simultaneously use each emission device 21 with a different energy interval Ei.

Due to the different energy levels Ei employed simultaneously (at least two emitters 21) or at successive times (one emitter 21), it is possible to bring to light the characteristics of different materials with particular clarity: the low-energy interval E1 shows cloth and textile materials; the intermediate-energy interval E2 allows illustrating the mixtures and the elastomer materials; the high-energy interval E3 allows illustrating the metallic materials.

As a function of the comparison between the control parameters CP and the corresponding reference parameters Ref, a notification signal NS is generated.

Preferably the notification signal NS is representative of whether the tyre under production T, which was subjected to tomographic control, is provided with the expected structural characteristics.

Preferably the notification signal NS is generated after a full rotation of said tyre under production T, such that the entire structure of the tyre itself can be taken under consideration before evaluating the consistency thereof with the design characteristics.

Preferably the information detected by means of the tomographic control can also be stored in a suitably arranged database, in which the data relative to each tyre under production is stored, in particular the tyre characteristics and the results of the executed controls.

As stated above, the control of the tyre under production T can be performed:
- before the vulcanisation operation;
- after the vulcanisation operation;
- both before and after the vulcanisation operation.

These three possible embodiments are schematically shown in figures 1a, 1b, 1c, respectively.

As stated above, the description provided herein with reference to the control station 20 can also be applied in an identical manner to the first control station 20a and to the second control station 20b.

In particular, in the case of the first control station 20a, the incoming flow of tyres under production comes from a work station 10, and the control is carried out on green tyres, while in the case of the second control station 20b the incoming flow of tyres under production comes from the vulcanisation station 30, and the control is then carried out on vulcanised tyres.

As a function of the notification signal NS generated for each tyre under production T, the control station 20 establishes how to manage the n tyres under production T received at the inlet in the predetermined time period:
- k tyres under production Tk (with k<=n) are reintroduced in the production line 1, since they are deemed suitable;
- n-k tyres under production Tn-k are instead conveyed outside the production line, since they are deemed unsuitable, at least in a preliminary phase.

Preferably the re-introduction of the k tyres under production Tk and the conveying of the n-k tyres under production Tn-k are carried out in a time period equal to the abovementioned predetermined time interval PT.

Preferably the tyres under production Tn-k conveyed to the outside of the production line 1 are sent to a verification station 40, where more in-depth inspections can be carried out aimed at verifying whether the tyres under production Tn-k must indeed be definitively rejected.

Thus, in light of that stated above, in the predetermined time period PT the control station 20 preferably operates as follows:
- it receives n tyres under production T (incoming flow F1) ;
- it re-introduces k tyres under production Tk in the production line (outgoing flow F2);
- it conveys n-k tyres under production Tn-k outside the production line, preferably towards the abovementioned verification station 40.

As stated, the invention also regards an apparatus for controlling tyres in a production line.

The apparatus 100 is advantageously provided in the control station 20, as well as in the first and in the second control station 20a, 20b.

It is noted that a single control station can have various apparatuses, each structured like the apparatus 100 that will be described hereinbelow. The flow of tyres under production to be examined can then be managed in a manner such to be distributed between different control apparatuses.

The apparatus 100 comprises a first actuating member M1 for setting the tyre under production T in rotation around the rotation axis X thereof.

Preferably a device for approaching-moving apart is also provided, in order to move the tyre under production T relative to the emission device 21 and to the detection device 22.

The apparatus 100 also comprises the abovementioned emission device 21 and detection device 22.

The apparatus 100 also comprises a second actuating member M2 operatively active on the emission device 21 in order to move the same in accordance with the above-described modes.

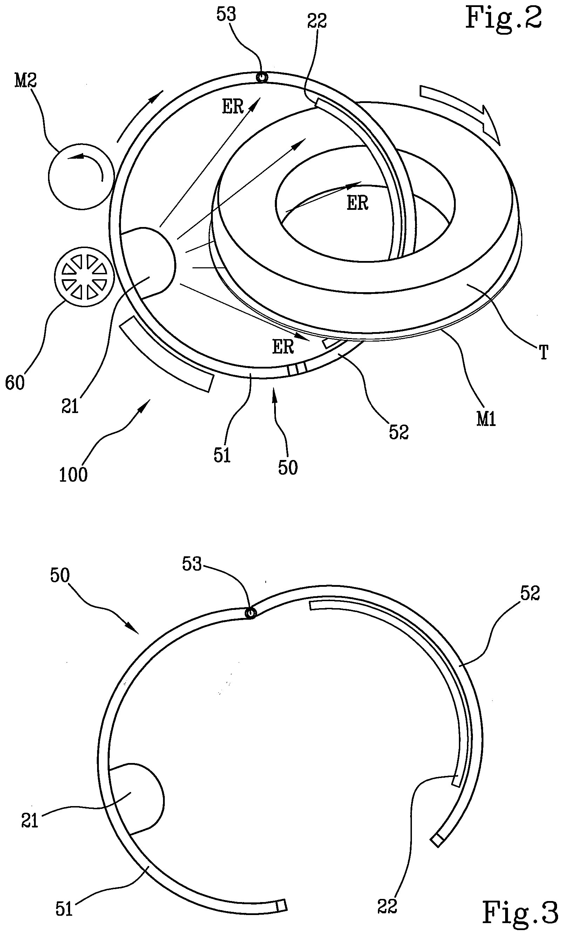

Preferably the apparatus 100 comprises a supporting structure 50 (figures 2, 4, 6, 7) on which the emission device 21 is mounted.

Preferably the second actuating member M2 is active on the supporting structure 50 to move the emission device 21.

Preferably the second actuating member M2 comprises one or more motorised wheels or rollers.

Preferably said one or more motorised wheels or rollers externally act on said supporting structure 50 to move the same in rotation.

In particular, in the embodiments in which the supporting structure 50 has a substantially C-shaped conformation, which will be better described hereinbelow, the second actuating member M2 comprises at least two, preferably three, wheels or rollers acting on the supporting structure 50. In this manner, even if the supporting structure 50 does not have a closed and complete annular shape, it is possible to transfer movement to the same at every instant, independent of the angular position thereof.

In one embodiment, the detection device 22 is substantially integral with the emission device 21.

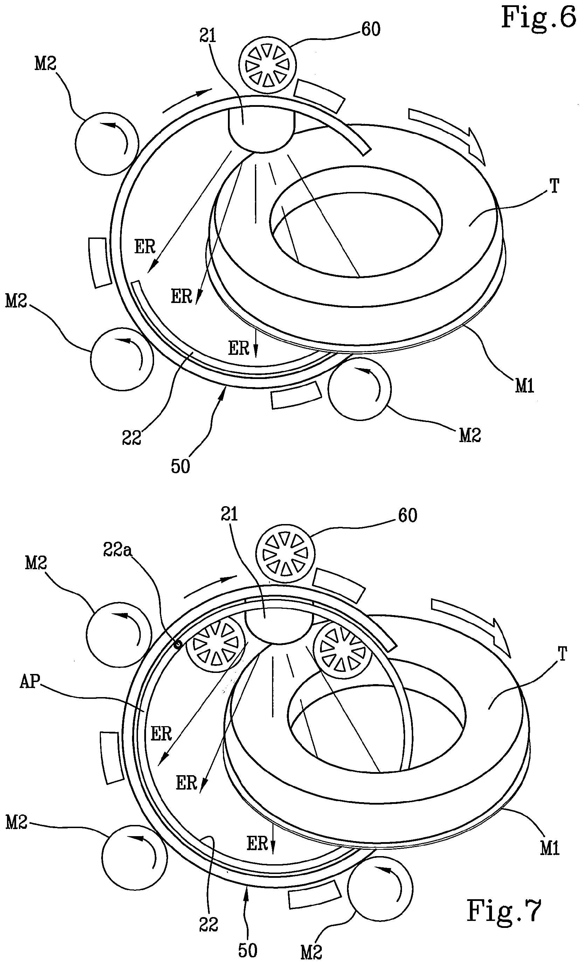

In such embodiment, the detection device 22 is rigidly constrained to the emission device 21. Preferably the detection device 22 is mounted on the abovementioned supporting structure 50. Preferably, the detection device 22 is disposed in such a manner that the radiations emitted by the emission device 21 hit the detection device 22 itself, possibly after an interaction with a portion of the tyre under production T that is examined. Preferably the detection device 22 is mounted on the supporting structure 50 in a position facing and opposed to the emission device 21. This embodiment is schematically illustrated in figures 2 and 6.

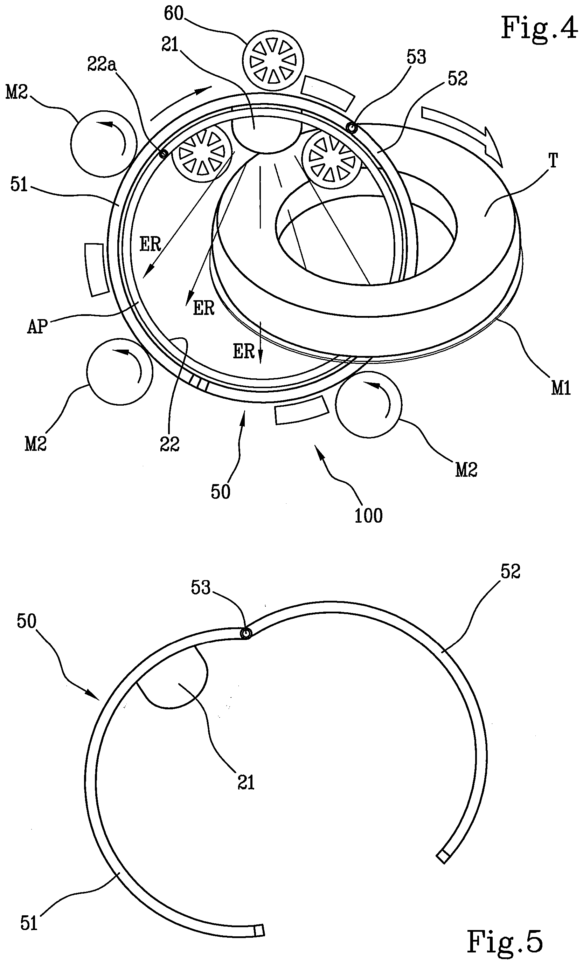

In a different embodiment (figures 4, 7), the detection device 22 is substantially stationary relative to the abovementioned given reference system. Preferably the detection device 22 is disposed along an annular profile AP formed with portions that, during movement of the emission device 21, are sequentially substantially opposed to the emission device 21 itself relative to at least one portion of the tyre under production T. In practice, the detection device 22 comprises one or more detectors arranged along the annular profile AP.

Preferably such one or more detectors are arranged in a manner so as to substantially completely cover (for 360°) the annular profile AP. In this manner, the electromagnetic radiations ER emitted by the emission device 21 during the movement thereof along the annular trajectory A can be received by one or more of said detectors. Preferably the annular profile AP is also concatenated with the tyre under production T. Preferably the annular profile AP substantially follows the annular trajectory A of the emission device 21. In order to be concatenated with the tyre under production T, the structure on which the detection device 22 is arranged is preferably composed of at least two separatable parts, e.g. hinged to each other (a hinge 22a is schematically represented in figures 4 and 7). An analogous structure, which will be better described hereinbelow, can also be employed for the structure that supports the emission device 21.

Preferably the supporting structure 50 of the emission device 21 has a substantially annular shape.

Preferably such supporting structure 50 comprises at least two mutually movable portions 51, 52; in this manner the supporting structure 50 can be configured between an open condition and a closed condition. In the open condition, the tyre under production T can be interposed between the two portions 51, 52, i.e. it can be moved relative to the supporting structure in such a manner that, following a subsequent closure of the portions 51, 52, the tyre itself is concatenated with the supporting structure 50. In the closed condition, the annular shape of the supporting structure 50 is concatenated with the tyre under production T.

By way of example, the portions 51, 52 can be hinged to each other: in particular, each portion 51, 52 has a first end hinged, by means of a hinge 53 schematically shown in figures 2-5, to a corresponding first end of the other portion, and a second end that can be brought close to/moved away from a corresponding second end of the other portion. The second ends are mutually moved away when the supporting structure 50 is in the open configuration. The second ends are instead mutually in contact, and preferably mutually constrained, when the supporting structure 50 is in the closed configuration.

In figure 2, the supporting structure 50 is in the closed configuration, while figure 3 schematically represents the open condition of the same supporting structure 50.

In a different embodiment (figures 6, 7), the supporting structure 50 is substantially C-shaped. Preferably such C shape is extended for about 270°, in any case leaving a sufficiently wide opening for allowing the insertion of the tyre under production. In this manner, without requiring the provision of mutually movable portions of the supporting structure 50 itself, it is possible to move the tyre under production T and the supporting structure 50 closer together in such a manner that the subsequent movement of the emission device 21 describes the annular trajectory A concatenated with the tyre under production T itself.

The following embodiments are thus preferably provided:
- a supporting structure 50 with annular shape, formed by at least two mutually movable portions 51, 52, e.g. hinged; a detection device 22 mounted on the same supporting structure 50 (figure 2);
- a supporting structure 50 with annular shape, formed by at least two mutually movable portions 51, 52, e.g. hinged; detection device 22 fixed relative to the given reference system and mounted on an annular support separated from the supporting structure 50 (figure 4);

- a supporting structure 50 is C-shaped; a detection device 22 mounted on the same supporting structure 50 (figure 6);
- a supporting structure 50 is C-shaped; a detection device 22 fixed relative to the given reference system and mounted on an annular support separated from the supporting structure 50 (figure 7).

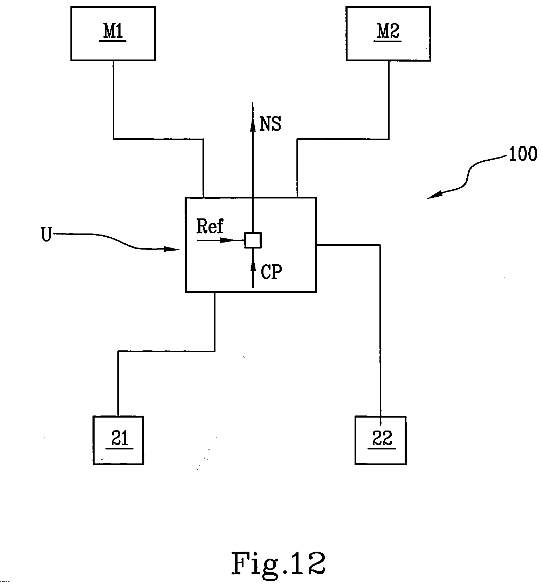

The apparatus 100 also comprises a processing unit U (figure 12) configured to carry out the above-described control, and in particular for:
- determining a plurality of control parameters CP as a function of the electromagnetic radiations ER detected by the detection device 22;
- comparing such control parameters CP with the corresponding reference parameters Ref;
- as a function of the comparison, generating the notification signal NS.

Preferably the processing unit U is also configured to select one or more of the abovementioned energy intervals E1, E2, E3.

Preferably the apparatus 100 also comprises the abovementioned ventilation system 60, operatively associated to the emission device 21 for the cooling thereof.

Preferably the ventilation system 60 is at least partially integral with the emission device 21. In particular one or more ventilator elements can be mounted on the abovementioned supporting structure 50, in proximity to the emission device 21 itself.

## Claims

1. A method for controlling tyres in a production line (1) comprising at least one work station (10), at least one control station (20) and at least one vulcanisation station (30), said method comprising:
- feeding n tyres under production (T) in a predetermined time interval (PT) to the inlet of said at least one control station (20);
- sending electromagnetic radiations (ER) in said at least one control station (20), on each of said n tyres under production (T), detecting them in accordance with a plurality of emission and detection operations;
- adjusting the mutual position of each of said n tyres under production (T) and of emission and detection devices (21, 22) during said emission and detection operations in such a manner that at least the positions from which said electromagnetic radiations (ER) are generated describe an annular path (P) concatenated as two consecutive rings of a chain with the toroidal structure of each of said n tyres under production (T), making a tomographic control generating at least one plurality of control parameters (CP);
wherein said emission device (21) is continuously moved in the same direction along an annular trajectory (A) defining said path (P);
- generating a notification signal (NS) as a function of a comparison between said control parameters (CP) and corresponding reference parameters (Ref);
- in the same predetermined time interval (PT) introducing k tyres under production (Tk) with k=<n to said production line (1) coming out of said at least one control station (20) and conveying n-k tyres under production (Tn-k) to the outside of said production line (1) as a function of said notification signal (NS).

2. A method as claimed in claim 1, wherein at each emission and detection operation of said electromagnetic radiations (ER), said radiations pass through a single portion of each of said n tyres under production (T) included between two radial half-planes (α1, α2) whose trace in an equatorial plane (E) of the tyre itself under production defines an angle (ϕ) smaller than 5°.

3. A method as claimed in claim 2, wherein the mutual position of each of said n tyres under production (T) and of said emission and detection devices (21, 22) is adjusted so that each segment joining an emission region of said emission device (21) with the respective detection region of said detection device (22) passes, in each emission and detection operation, through a single portion of said tyre under production included between two radial half-planes (β1, β2) whose trace in an equatorial plane (E) of the tyre itself under production defines an angle (θ) smaller than 5°.

4. A method as claimed in any one of the preceding claims, wherein said control station (20) is provided after said at least one work station (10) and upstream of said at least one vulcanisation station (30).

5. A method as claimed in any one of claims 1 to 3, wherein said control station (20) is provided downstream of said at least one vulcanisation station (30).

6. A method as claimed in any one of the preceding claims, wherein each of said n-k tyres under production (Tn-k), conveyed to the outside of the production line (1), is sent to a verification station (40) for carrying out at least one further inspection on the same tyre under production.

7. A method as claimed in any one of the preceding claims, wherein provision is made for a first control station (20a) between said at least one work station (10) and said at least one vulcanisation station (30) and a second control station (20b) downstream of said at least one vulcanisation station (30).

8. A method as claimed in any one of the preceding claims, wherein said predetermined time (PT) is included between about n/5 times and about 5n times the maximum time employed by a tyre under production for moving from a work station which is one cycle time.

9. A method as claimed in any one of the preceding claims, wherein said predetermined time (PT) corresponds to about n times the maximum time employed by a tyre under production for moving from a work station which is one cycle time.

10. An apparatus for controlling tyres in a production line comprising:
- a first actuating member (M1) for a tyre under production (T) to be controlled, configured to set said tyre under production (T) in rotation around a rotation axis thereof relative to a given reference system;
- at least one emission device (21) adapted to emit electromagnetic radiations (ER);
- a second actuating member (M2) configured to repeatedly move, relative to said given reference system, said emission device (21) along an annular trajectory (A) concatenated as two consecutive rings of a chain with said tyre under production (T), during the movement of said tyre under production (T) said emission device (21) being adapted to send electromagnetic radiations (ER) directed onto at least one portion (T1) of said tyre under production (T) ;
- at least one detection device (22) for detecting said electromagnetic radiations (ER) after an interaction between said electromagnetic radiations (ER) and at least one portion of said tyre under production (T);
- a processing unit (U) configured to:
• determine a plurality of control parameters (CP) as a function of said detected electromagnetic radiations (ER);
• carrying out a comparison between said control parameters (CP) and predetermined reference parameters (Ref);
• generating a notification signal (NS) as a function of said comparison,
wherein said second actuating member (M2) is configured to continuously move said emission device (21) in the same direction along said annular trajectory (A).

11. An apparatus as claimed in claim 10, wherein said processing unit (U) is configured to select one or more energy intervals (E1, E2, E3) of said electromagnetic radiations (ER) detected before carrying out said comparison.

12. An apparatus as claimed in claim 10 , comprising a supporting structure (50) on which said emission device (21) is mounted, said second actuating member (M2) being active on said supporting structure (50) to move said emission device (21).

13. An apparatus as claimed in claim 12, wherein said supporting structure (50) has a substantially annular shape.

14. An apparatus as claimed in claim 13, wherein said supporting structure (50) comprises at least two mutually movable portions (51, 52) in such a manner that said supporting structure (50) can be configured between an open condition in which said tyre under production (T) can be interposed between said portions (51, 52), and a closed condition in which the annular shape of said supporting structure (50) is concatenated as two consecutive rings in a chain with said tyre under production (T).

15. An apparatus as claimed in claim 12, wherein said supporting structure (50) is substantially C-shaped.

## Patentansprüche

1. Verfahren zur Kontrolle von Reifen in einer Fertigungslinie (1) umfassend zumindest eine Arbeitsstation (10), zumindest eine Kontrollstation (20) und zumindest eine Vulkanisierstation (30), wobei das Verfahren umfasst:
- Zuführen von n Reifen in Fertigung (T) in einem vorbestimmten Zeitintervall (PT) an den Einlass der zumindest einen Kontrollstation (20);
- Aussenden von elektromagnetischen Strahlungen (ER) in der zumindest einen Kontrollstation (20) auf jeden der n Reifen in Fertigung (T), zu deren Erfassung in Übereinstimmung mit einer Vielzahl von Abstrahl- und Erfassungsvorgängen;
- Einstellen der gegenseitige Stellung eines jeden der n Reifen in Fertigung (T) und von Abstrahl- und Erfassungseinrichtungen (21, 22) während der Abstrahl- und Erfassungsvorgänge auf solche Weise, dass zumindest die Stellungen, aus denen die elektromagnetischen Strahlungen (ER) erzeugt werden, einen ringförmigen Pfad (P) beschreiben, verkettet als zwei aufeinanderfolgende Ringe einer Kette mit der ringförmigen Struktur eines jeden der n Reifen in Fertigung (T), wodurch eine tomographische Kontrolle gebildet wird, die zumindest eine Vielzahl von Kontrollparametern (CP) erzeugt;
wobei die Abstrahlungseinrichtung (21) kontinuierlich in dieselbe Richtung entlang einer ringförmigen Bahn (A) bewegt wird, die den Pfad (P) definiert;
- Erzeugen eines Benachrichtigungssignals (NS) als eine Funktion eines Vergleichs zwischen den Kontrollparametern (CP) und entsprechenden Referenzparametern (Ref);
- in demselben vorbestimmten Zeitintervall (PT) Einführen von k Reifen in Fertigung (Tk), wobei k=<n, in die Fertigungslinie (1), die aus der zumindest einen Kontrollstation (20) kommen, und Transportieren von n-k Reifen in Fertigung (Tn-k) aus der Fertigungslinie (1) als eine Funktion des Benachrichtigungssignals (NS).

2. Verfahren nach Anspruch 1, wobei bei jedem Abstrahl-und Erfassungsvorgang der elektromagnetischen Strahlungen (ER) die Strahlungen durch einen einzelnen Abschnitt eines jeden der n Reifen in Fertigung (T) passieren, der zwischen zwei radialen Halbebenen (α1, α2) liegt, und deren Spur in einer Äquatorialebene (E) des Reifens selbst in Fertigung einen Winkel (ϕ) kleiner als 5° definiert.

3. Verfahren nach Anspruch 2, wobei die gegenseitige Stellung eines jeden der n Reifen in Fertigung (T) und der Abstrahl- und Erfassungseinrichtungen (21, 22) so eingestellt wird, dass jedes Segment, das eine Auslassungsregion der Abstrahleinrichtung (21) mit der jeweiligen Erfassungsregion der Erfassungseinrichtung (22) verbindet, in jedem Abstrahl- und Erfassungsvorgang durch einen einzelnen Abschnitt des Reifens in Fertigung verläuft, der zwischen zwei radialen Halbebenen (β1, β2) eingeschlossen ist, deren Spur in einer Äquatorialebene (E) des Reifens selbst unter Fertigung einen Winkel (θ) kleiner als 5° definiert.

4. Verfahren nach einem der vorhergehenden Ansprüche, wobei die Kontrollstation (20) nach der zumindest einen Arbeitsstation (10) und stromaufwärts der zumindest einen Vulkanisierstation (30) vorgesehen ist.

5. Verfahren nach einem der vorhergehenden Ansprüche 1 bis 3, wobei die Kontrollstation (20) stromabwärts der zumindest einen Vulkanisierstation (30) vorgesehen ist.

6. Verfahren nach einem der vorhergehenden Ansprüche, wobei jeder der n-k Reifen in Fertigung (Tn-k), der aus der Fertigungslinie (1) heraus transportiert wird, an eine Prüfstation (40) gesendet wird, um zumindest eine weitere Inspektion an demselben Reifen in Fertigung auszuführen.

7. Verfahren nach einem der vorhergehenden Ansprüche, wobei eine erste Kontrollstation (20a) zwischen der zumindest einen Arbeitsstation (10) und der zumindest einen Vulkanisierstation (30) vorgesehen ist, und eine zweite Kontrollstation (20b) stromabwärts der zumindest einen Vulkanisierstation (30).

8. Verfahren nach einem der vorhergehenden Ansprüche, wobei die vorbestimmte Zeit (PT) zwischen etwa n/5-mal und etwa 5n-mal der maximalen Zeit liegt, die von einem Reifen in Fertigung benötigt wird, um sich von einer Arbeitsstation zu bewegen, was einer Taktzeit entspricht.

9. Verfahren nach einem der vorhergehenden Ansprüche, wobei die vorbestimmte Zeit (PT) etwa n-mal der maximalen Zeit liegt, die von einem Reifen in Fertigung benötigt wird, um sich von einer Arbeitsstation zu bewegen, was einer Taktzeit entspricht.

10. Vorrichtung zur Kontrolle von Reifen in einer Fertigungslinie, umfassend:
- ein erstes Betätigungselement (M1) für einen Reifen in Fertigung (T), der kontrolliert wird, das dazu ausgestaltet ist, den Reifen in Fertigung (T) in Drehung um eine Drehachse desselben relativ zu einem gegebenen Referenzsystem zu versetzen;
- zumindest eine Abstrahleinrichtung (21), die dazu geeignet ist, elektromagnetischen Strahlungen (ER) abzustrahlen;
- ein zweites Betätigungselement (M2), das dazu ausgestaltet ist, die Abstrahleinrichtung (21) wiederholt relativ zu dem gegebenen Referenzsystem entlang einer ringförmigen Bahn (A) verkettet als zwei aufeinanderfolgende Ringe einer Kette mit dem Reifen in Fertigung (T) zu bewegen, während der Bewegung des Reifens in Fertigung (T), wobei die Abstrahleinrichtung (21) dazu geeignet ist, elektromagnetische Strahlungen (ER) auszusenden, die auf zumindest einen Abschnitt (T1) des Reifens in Fertigung (T) gerichtet sind;
- zumindest eine Erfassungseinrichtung (22) zur Erfassung der elektromagnetischen Strahlungen (ER) nach einer Wechselwirkung zwischen den elektromagnetischen Strahlungen (ER) und zumindest einem Abschnitt des Reifens in Fertigung (T);
- eine Verarbeitungseinheit (U), die dazu ausgestaltet ist:
• eine Vielzahl von Kontrollparametern (CP) als eine Funktion der erfassten elektromagnetischen Strahlungen (ER) zu bestimmen;
• einen Vergleich zwischen den Kontrollparametern (CP) und vorbestimmten Referenzparametern (Ref) auszuführen;
• ein Benachrichtigungssignal (NS) als eine Funktion des Vergleichs zu erzeugen,
wobei das Betätigungselement (M2) dazu ausgestaltet ist, die Abstrahleinrichtung (21) kontinuierlich in dieselbe Richtung entlang der ringförmigen Bahn (A) zu bewegen.

11. Vorrichtung nach Anspruch 10, wobei die Verarbeitungseinheit (U) dazu ausgestaltet ist, ein oder mehrere Energieintervalle (E1, E2, E3) der erfassten elektromagnetischen Strahlungen (ER) vor dem Ausführen des Vergleichs auszuwählen.

12. Vorrichtung nach Anspruch 10, umfassend eine Trägerstruktur (50) an der die Abstrahleinrichtung (21) montiert ist, wobei das zweite Betätigungselement (M2) an der Trägerstruktur (50) aktiv ist, um die Abstrahleinrichtung (21) zu bewegen.

13. Vorrichtung nach Anspruch 12, wobei die Trägerstruktur (50) eine im Wesentlichen ringförmige Gestalt aufweist.

14. Vorrichtung nach Anspruch 13, wobei die Trägerstruktur (50) zumindest zwei Abschnitte (51, 52) umfasst, die wechselseitig auf solche Weise beweglich sind, dass die Trägerstruktur (50) zwischen einem offenen Zustand, in welcher der Reifen in Fertigung (T) zwischen den Abschnitten (51, 52) angeordnet werden kann, und einem geschlossenen Zustand, in dem die ringförmige Gestalt der Trägerstruktur (50) als zwei aufeinander folgende Ringe in einer Kette mit dem Reifen in Fertigung (T) verkettet ist, ausgestaltet werden kann.

15. Vorrichtung nach Anspruch 12, wobei die Trägerstruktur (50) im Wesentlichen C-förmig ist.

## Revendications

1. Procédé de contrôle de pneus dans une chaîne de production (1) comprenant au moins une station de travail (10), au moins une station de contrôle (20) et au moins une station de vulcanisation (30), ledit procédé comprenant le fait :
- d'acheminer n pneus en cours de production (T) dans un intervalle de temps prédéterminé (PT) vers l'entrée de ladite au moins une station de contrôle (20) ;
- d'envoyer des rayonnements électromagnétiques (ER) dans ladite au moins une station de contrôle (20), sur chacun desdits n pneus en cours de production (T), de les détecter en fonction d'une pluralité d'opérations d'émission et de détection ;
- d'ajuster la position mutuelle de chacun desdits n pneus en cours de production (T) et des dispositifs d'émission et de détection (21, 22) pendant lesdites opérations d'émission et de détection de sorte qu'au moins les positions à partir desquelles lesdits rayonnements électromagnétiques (ER) sont générés décrivent un trajet annulaire (P) concaténé en deux anneaux consécutifs d'une chaîne avec la structure torique de chacun desdits n pneus en cours de production (T), en effectuant un contrôle tomographique générant au moins une pluralité de paramètres de contrôle (CP) ;
dans lequel ledit dispositif d'émission (21) est déplacé en continu dans la même direction le long d'une trajectoire annulaire (A) définissant ledit trajet (P) ;
- de générer un signal de notification (NS) en fonction d'une comparaison entre lesdits paramètres de contrôle (CP) et des paramètres de référence correspondants (Ref) ;
- dans le même intervalle de temps prédéterminé, d'introduire k pneus en cours de production (Tk) avec k≤n à ladite chaîne de production (1) sortant de ladite au moins une station de contrôle (20) et de transporter n-k pneus en cours de production (Tn-k) à l'extérieur de ladite chaîne de production (1) en fonction dudit signal de notification (NS).

2. Procédé tel que revendiqué dans la revendication 1, **caractérisé en ce qu'**à chaque opération d'émission et de détection desdits rayonnements électromagnétiques (ER), lesdits rayonnements traversent une seule partie de chacun desdits n pneus en cours de production (T) comprise entre deux demi-plans radiaux (α1, α2) dont la trace dans un plan équatorial (E) du pneu lui-même en cours de production définit un angle (ϕ) inférieur à 5°.

3. Procédé tel que revendiqué dans la revendication 2, dans lequel la position mutuelle de chacun desdits n pneus en cours de production (T) et desdits dispositifs d'émission et de détection (21, 22) est ajusté de sorte que chaque segment reliant une région d'émission dudit dispositif d'émission (21) à la région de détection respective dudit dispositif de détection (22) traverse, dans chaque opération d'émission et de détection, une seule partie dudit pneu en cours de production comprise entre deux demi-plans radiaux (β1, β2) dont la trace dans un plan équatorial (E) du pneu lui-même en cours de production définit un angle (ϕ) inférieur à 5°.

4. Procédé tel que revendiqué dans l'une quelconque des revendications précédentes, dans lequel ladite station de contrôle (20) est prévue après ladite au moins une station de travail (10) et en amont de ladite au moins une station de vulcanisation (30).

5. Procédé tel que revendiqué dans l'une quelconque des revendications 1 à 3, dans lequel ladite station de contrôle (20) est prévue en aval de ladite au moins une station de vulcanisation (30).

6. Procédé tel que revendiqué dans l'une quelconque des revendications précédentes, dans lequel chacun desdits n-k pneus en cours de production (Tn-k) transportés à l'extérieur de la chaîne de production (1), est envoyé à une station de vérification (40) pour effectuer au moins une autre inspection sur le même pneu en cours de production.

7. Procédé tel que revendiqué dans l'une quelconque des revendications précédentes, dans lequel on prévoit une première station de contrôle (20a) entre ladite au moins une station de travail (10) et ladite au moins une station de vulcanisation (30) et une deuxième station de contrôle (20b) en aval de ladite au moins une station de vulcanisation (30),

8. Procédé tel que revendiqué dans l'une quelconque des revendications précédentes, dans lequel ledit temps prédéterminé (PT) est compris entre environ n/5 fois et environ 5n fois le temps maximal utilisé par un pneu en cours de production pour se déplacer à partir d'une station de travail qui est un temps de cycle.

9. Procédé tel que revendiqué dans l'une quelconque des revendications précédentes, dans lequel ledit temps prédéterminé (PT) correspond à environ n fois le temps maximal utilisé par un pneu en cours de production pour se déplacer à partir d'une station de travail qui est un temps de cycle.

10. Appareil de contrôle de pneus dans une chaîne de production comprenant :
- un premier élément d'actionnement (M1) pour un pneu en cours de production (T) à contrôler, configuré pour mettre ledit pneu en cours de production (T) en rotation autour d'un axe de rotation de celui-ci par rapport à un système de référence donné ;
- au moins un dispositif d'émission (21) adapté pour émettre des rayonnements électromagnétiques (ER) ;
- un deuxième élément d'actionnement configuré pour déplacer de façon répétée, par rapport audit système de référence donné, ledit dispositif d'émission (21) le long d'une trajectoire annulaire (A) concaténée en deux anneaux consécutifs d'une chaîne avec ledit pneu en cours de production (T), pendant le déplacement dudit pneu en cours de production (T), ledit dispositif d'émission (21) étant adapté pour envoyer des rayonnements électromagnétiques (ER) dirigés sur au moins une partie (T1) dudit pneu en cours de production (T) ;
- au moins un dispositif de détection (22) pour détecter lesdits rayonnements électromagnétiques (ER) après une interaction entre lesdits rayonnements électromagnétiques (ER) et au moins une partie dudit pneu en cours de production (T) ;
- une unité de traitement (U) configurée pour :
• déterminer une pluralité de paramètres de contrôle (CP) en fonction desdits rayonnements électromagnétiques détectés (ER) ;
• effectuer une comparaison entre lesdits paramètres de contrôle et des paramètres de référence prédéterminés (Ref) ;
• générer un signal de notification (NS) en fonction de ladite comparaison,
dans lequel ledit deuxième élément d'actionnement (M2) est configuré pour déplacer en continu ledit dispositif d'émission (21) dans la même direction le long de ladite trajectoire annulaire (A).

11. Appareil tel que revendiqué dans la revendication 10, dans lequel ladite unité de traitement (U) est configurée pour sélectionner un ou plusieurs intervalle(s) d'énergie (E1, E2, E3) desdits rayonnements électromagnétiques détectés avant d'effectuer ladite comparaison.

12. Appareil tel que revendiqué dans la revendication 10, comprenant une structure de support (50) sur laquelle ledit dispositif d'émission (21) est monté, ledit deuxième élément d'actionnement (M2) étant actif sur ladite structure de support (50) pour déplacer ledit dispositif d'émission (21).

13. Appareil tel que revendiqué dans la revendication 12, dans lequel ladite structure de support (50) a une forme essentiellement annulaire.

14. Appareil tel que revendiqué dans la revendication 13, dans lequel ladite structure de support (50) comprend au moins deux parties mutuellement mobiles (51, 52) de sorte que ladite structure de support (50) puisse être configurée entre une condition ouverte dans laquelle ledit pneu en cours de production (T) peut être interposé entre lesdites parties (51, 52) et une condition fermée dans laquelle la forme annulaire de ladite structure de support (50) est concaténée en deux anneaux consécutifs dans une chaîne avec ledit pneu en cours de production (T).

15. Appareil tel que revendiqué dans la revendication 12, dans lequel ladite structure de support (50) est essentiellement en forme de C.
